# EUROPÄISCHE PATENTSCHRIFT

(11) **EP 2 997 340 B1**
(45) Veröffentlichungstag und Bekanntmachung des Hinweises auf die Patenterteilung: **10.10.2018**
(21) Anmeldenummer: 14709949.3
(22) Anmeldetag: 13.03.2014
(51) Int. Cl.: B62M 6/50, B62M 6/55, G01L 5/22, G01L 1/16, G01L 3/10

(54) **MOTORISCH UND MIT MUSKELKRAFT BETREIBBARES FAHRZEUG MIT VERBESSERTEM DREHMOMENTSENSOR**
VEHICLE WHICH CAN BE OPERATED BY MOTOR AND WITH MUSCLE POWER AND HAS AN IMPROVED TORQUE SENSOR
VÉHICULE POUVANT ÊTRE ACTIONNÉ PAR MOTEUR ET PAR LA FORCE MUSCULAIRE, MUNI D'UN CAPTEUR DE COUPLE AMÉLIORÉ

(30) Priorität: 17.05.2013 DE 102013209262
(43) Veröffentlichungstag der Anmeldung: 23.03.2016
(73) Patentinhaber: Robert Bosch GmbH, 70442 Stuttgart (DE)
(72) Erfinder: LIEBLER, Marko, 75015 Bretten (DE); HINTERKAUSEN, Markus, 71701 Schwieberdingen (DE); KIMMICH, Peter, 71144 Steinenbronn (DE); BENDEL, Karl, 71701 Schwieberdingen (DE)
(86) Internationale Anmeldenummer: PCT/EP2014/054926
(87) Internationale Veröffentlichungsnummer: WO 2014/183901

(56) Entgegenhaltungen:
- WO-A1-03/034013
- WO-A1-2006/065813
- US-A1- 2007 028 700
- US-A1- 2012 312 618
- Chih-Jer Lin ET AL: "Study on Wireless Torque Measurement Using SAW Sensors" In: "Study on Wireless Torque Measurement Using SAW Sensors", 24. Februar 2012 (2012-02-24), InTech, XP055128905, ISBN: 978-9-53-510103-1 Seiten 109-137, Seite 109 - Seite 137
- Marien Van Ditten: "Torque Sensing for E-bike Applications", Master Thesis, 27. Juni 2011 (2011-06-27), Seiten 1-147, XP055128942, Gefunden im Internet: URL:http://repository.tudelft.nl/view/ir/u uid:74ee44a2-08b9-480b-9f29-663ab61a45ba [gefunden am 2014-07-15]

## Beschreibung

### Stand der Technik

Die vorliegende Erfindung betrifft ein Elektrofahrrad, mit einem verbesserten Drehmomentsensor.

Bei Elektrofahrrädern werden beispielsweise Drehmomentsensoren in Form von Dehnungsmessstreifen an einem Kurbeltrieb verwendet, um ein durch einen Fahrer aufgebrachtes Drehmoment zu erfassen. Eine Steuereinheit steuert dann, basierend auf dem durch den Fahrer aufgebrachten Drehmoment sowie einer von einem Fahrer gewählten Unterstützung durch einen Elektromotor, den Elektromotor. Die bisher verwendeten Drehmomentsensoren sind jedoch relativ aufwändig und mit hohen Kosten verbunden. Weiterhin sind beispielsweise aus der US 20030074985 A1 Messverfahren bekannt, welche unter Verwendung eines zusätzlichen Getriebes mit Federvorspannung zur Messung von Axialkräften einer Schrägverzahnung des zusätzlichen Getriebes ein Drehmoment messen. Insbesondere aus Kosten- und Gewichtsgründen sind derartige Messverfahren ebenfalls wenig geeignet. Weiterhin ist aus der US2012/312618 A1 ein Fahrzeug gemäß dem Oberbegriff des Anspruchs 1 bekannt. Aus der WO 03/034013 A1 ist ferner eine Anordnung mit mehreren Oberflächenwellensensoren bekannt, welche in einem Winkel zueinander angeordnet sind. Die US 2007/028700 A1 offenbart einen lösbar angeordneten Oberflächenwellensensor, welcher an einem Zwischenbauteil montiert ist. Weiterhin zeigt die Veröffentlichung "Study on Wireless Torque Measurement Using SAW Sensors", 24.02.2012, Intechopen, ISBN: 978-9-53-510103-1, Seiten 109 bis 137, theoretische Überlegungen hinsichtlich Oberflächenwellensensoren. Weiterhin offenbart die Masterarbeit "Torque Sensing for E-bike Applications" von Marien van Ditten, TU Delft, 27.06.2011, theoretische Überlegungen hinsichtlich einer Drehmomenterfassung bei Elektrofahrrädern.

### Offenbarung der Erfindung

Das erfindungsgemäße Elektrofahrrad, mit den Merkmalen des Anspruchs weist demgegenüber den Vorteil auf, dass ein von einem Fahrer aufgebrachtes Drehmoment sicher und einfach erfasst werden kann. Die Erfassung kann dabei berührungslos und sehr kostengünstig erfolgen. Ferner weist der erfindungsgemäße Drehmomentsensor nur einen sehr kleinen Bauraum auf und ist sehr robust. Hierdurch ist insbesondere eine Eignung für Elektrofahrräder gegeben. Dies wird erfindungsgemäß dadurch erreicht, dass der zur Erfassung eines von einem Fahrer an einem Kurbeltrieb aufgebrachten Drehmoments verwendete Sensor wenigstens einen akustischen Oberflächenwellensensor umfasst, welcher am Kurbeltrieb angeordnet ist. Der akustische Oberflächenwellensensor führt über eine dynamische Messung eines Drehmoments mittels Oberflächenwellen eine direkte Messung einer durch Torsionsbeanspruchung aufgrund eines von einem Fahrer eingebrachten Drehmoments aus. Dabei wird eine Zeitverzögerung bei einer Reflexion eines hochfrequenten Abfrageimpulses als Maß für die Torsion der Oberflächenwelle verwendet. Da der akustische Oberflächenwellensensor ein rein passives Bauelement sein kann, ist keine eigene Energiequelle zum Betrieb notwendig. Zum Erfassen des Drehmoments wird dabei ein Hochfrequenzsignal z.B. durch eine Abfrageeinheit zum Oberflächenwellensensor gegeben. Wenn ein vom Fahrer aufgebrachtes Drehmoment am Oberflächenwellensensor vorhanden ist, ändert sich das zur Abfrageeinheit zurückgesendete Signal, was zur Bestimmung des vom Fahrer aufgebrachten Drehmoments verwendet werden kann. Alternativ ist die Abfrage-/Sendeeinheit in den Oberflächenwellensensor integriert. Somit weist der erfindungsgemäße Aufbau mit einem Oberflächenwellensensor einen sehr einfachen und robusten Aufbau auf, wobei insbesondere auch eine deutlich einfachere Elektronik möglich ist. Durch die bevorzugte drahtlose Abfrage des Oberflächenwellensensors kann auch eine Anordnung an unzugänglichen Stellen erfolgen. Dabei hat der erfindungsgemäße Drehmomentsensor keinen negativen Einfluss auf einen mechanischen Gesamtwirkungsgrad und ist sehr leicht, platzsparend und preisgünstig.

Die Unteransprüche zeigen bevorzugte Weiterbildungen der Erfindung.

Besonders bevorzugt ist der akustische Oberflächenwellensensor auf einer mit der Kurbelwelle verbundenen Hülse angeordnet. Die Hülse kann beispielsweise über eine Verzahnung mit der Kurbelwelle verbunden werden. Alternativ bevorzugt ist der akustische Oberflächenwellensensor direkt auf der Kurbelwelle angeordnet.

Weiter bevorzugt ist der akustische Oberflächenwellensensor ein separates Bauteil und umfasst insbesondere ein piezoelektrisches Substrat und einen Interdigitalwandler sowie eine Antenne. Der Interdigitalwandler ist auf dem Substrat angeordnet und weist einen kammartigen Aufbau von zwei Elektroden auf.

Vorzugsweise alternativ sind Komponenten des akustischen Oberflächenwellensensors oder der gesamte Oberflächenwellensensor direkt auf einer Oberfläche angeordnet, an welcher ein Drehmoment gemessen werden soll. Die Komponenten des Oberflächenwellensensors können dabei beispielsweise auf die zu messenden Oberfläche aufgedruckt werden.

Weiter bevorzugt umfasst der Oberflächenwellensensor eine Reflektoreinrichtung. Besonders bevorzugt ist die Reflektoreinrichtung auf dem separaten Bauteil, auf dem auch der restliche Oberflächenwellensensor angeordnet ist, vorgesehen. Alternativ ist die Reflektoreinrichtung direkt auf der Oberfläche, auf welcher das Drehmoment gemessen werden soll, angeordnet. Besonders bevorzugt umfasst die Reflektoreinrichtung Rillen oder andere längliche Vertiefungen und/oder längliche vorstehende Bereiche.

Gemäß einer weiterhin bevorzugten Ausgestaltung der vorliegenden Erfindung umfasst das Elektrofahrrad ferner eine Leiterplatte, wobei eine Antenne des Oberflächenwellensensors auf der Leiterplatte angeordnet ist oder in die Leiterplatte integriert ist. Die Leiterplatte ist besonders bevorzugt an der Kurbelwelle des Elektrofahrrades angeordnet.

Weiter bevorzugt umfasst das erfindungsgemäße Fahrzeug einen zweiten Oberflächenwellensensor. Hierdurch kann bei einer auftretenden Torsion an der Oberfläche mit dem einen Oberflächenwellensensor eine Längung und mit dem anderen Oberflächenwellensensor eine Stauchung erfasst werden. Vorzugsweise weisen dabei der erste und zweite Oberflächenwellensensor jeweils eine Längsachse auf, wobei die Längsachsen der beiden Oberflächenwellensensoren nicht parallel zu einer Längsachse der Kurbelwelle angeordnet sind. Mit anderen Worten sind die Längsachsen der beiden Oberflächenwellensensoren schräg zur Längsachse der Kurbelwelle angeordnet. Besonders bevorzugt sind dabei die beiden Oberflächenwellensensoren derart angeordnet, dass sich ihre Längsachsen schneiden. Besonders bevorzugt schneiden sich die Längsachsen der beiden Oberflächenwellensensoren dabei in einem Winkel von 90°.

Alternativ sind die beiden Längsachsen des ersten und zweiten Oberflächenwellensensors symmetrisch zu der Längsachse der Kurbelwelle angeordnet.

Für einen besonders kompakten Aufbau umfasst der akustische Oberflächenwellensensor eine separate Abfrageeinheit zur Abfrage des Oberflächenwellensensors. Die Abfrageeinheit sendet und empfängt Signale und ist bevorzugt an einem Gehäuse des Kurbeltriebs angeordnet.

Weiter bevorzugt ist der Elektromotor des Elektrofahrrades direkt am Kurbeltrieb angeordnet. Hierdurch kann bei einem Elektrofahrrad eine sogenannte Mittelmotoranordnung realisiert werden.

Wie schon erläutert, kommen bei dem erfindungsgemäßen Elektrofahrrad, die durch Verwendung der akustischen Oberflächenwellensensoren erhaltene Vorteile, besonders gut zur Geltung die durch Verwendung der akustischen Oberflächenwellensensoren erhaltenen Vorteile besonders gut zur Geltung.

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Ansicht eines Elektrofahrrads gemäß einem ersten Ausführungsbeispiel der Erfindung,
- Figur 2: eine detaillierte Darstellung eines Kurbeltriebs und eines Elektromotors des Elektrofahrrades von Figur 1,
- Figur 3: eine schematische Darstellung einer Kurbelwelle mit Drehmomenthülse von Figur 2,
- Figur 4: eine schematische Darstellung der einzelnen Bauteile der Kurbelwelle und Drehmomenthülse von Figur 3,
- Figur 5: eine schematische Darstellung der Funktionsweise des Drehmomentsensors von Figur 1, und
- Figuren 6 bis 10: schematische Darstellungen von alternativen Ausgestaltungen des erfindungsgemäßen Drehmomentsensors.

### Bevorzugte Ausführungsformen der Erfindung

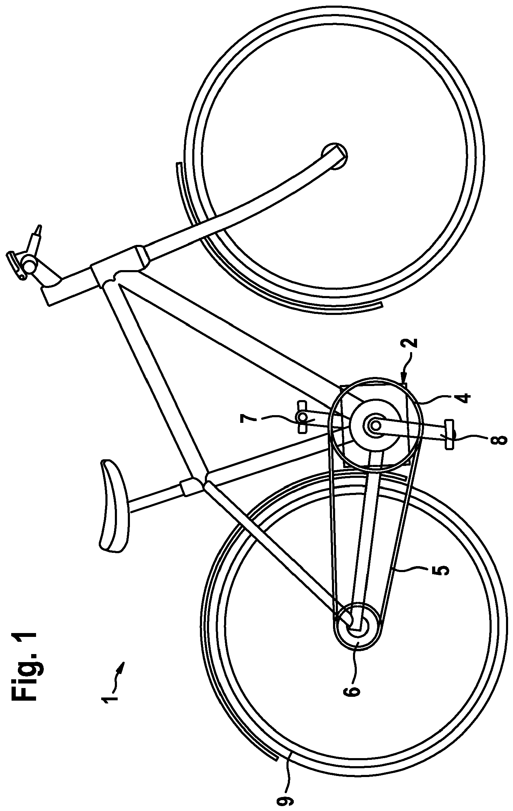

Nachfolgend wird unter Bezugnahme auf die Figuren 1 bis 5 ein Elektrofahrrad 1 gemäß einem ersten bevorzugten Ausführungsbeispiel der Erfindung im Detail beschrieben.

Wie aus Figur 1 ersichtlich ist, umfasst das Elektrofahrrad 1 einen Kurbeltrieb 2 mit einer Kurbelwelle 12 sowie einer ersten Kurbel 7 und einer zweiten Kurbel 8. Das Bezugszeichen 3 bezeichnet einen Elektromotor, welcher über ein Getriebe 10 mit einem Kettenblatt (Abtrieb) verbunden ist. Das Kettenblatt 4 gibt eine Antriebskraft über eine Kette 5 an ein an einem Hinterrad 9 des Elektrofahrrads angeordnetes Ritzels 6 ab.

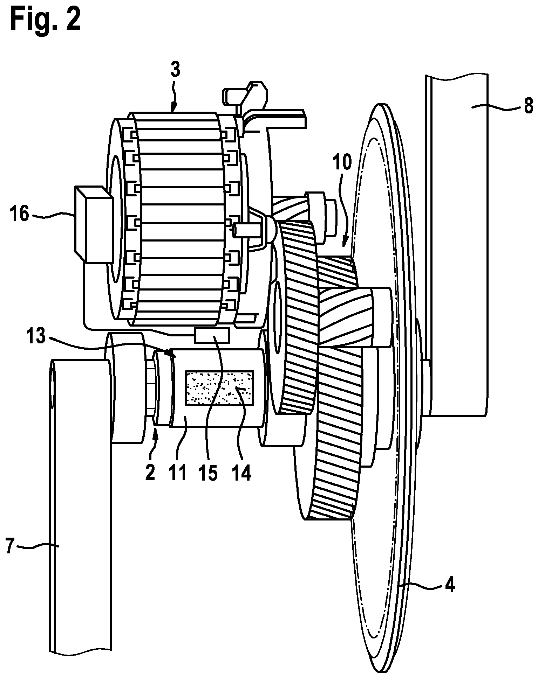

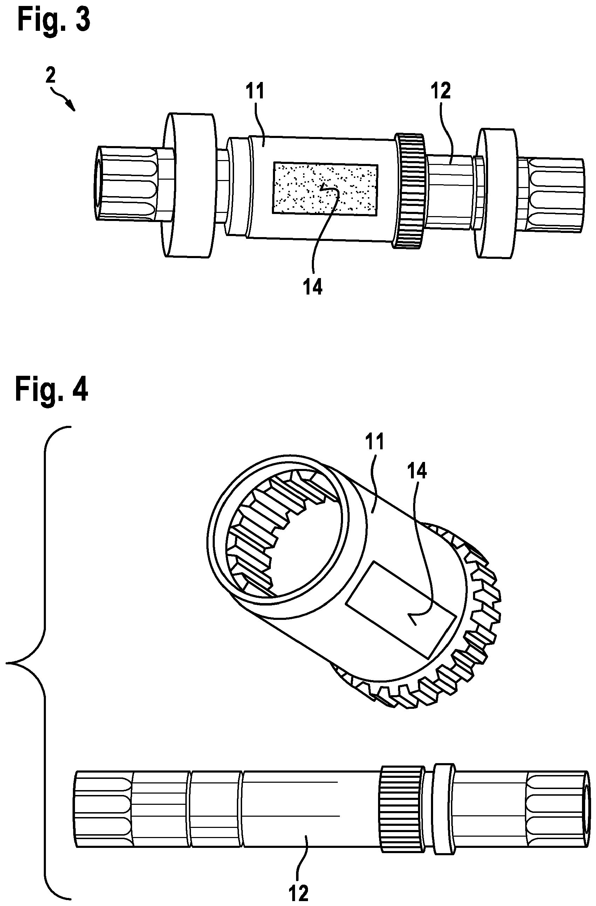

In Figur 2 ist im Detail der Kurbeltrieb 2 mit dem Getriebe 10 und dem Elektromotor 3 dargestellt. Wie insbesondere aus Figur 3 ersichtlich ist, ist in dem mittleren Bereich der Kurbelwelle 12 eine Drehmomenthülse 11 angeordnet. Ein vom Fahrer auf die Kurbelwelle übertragenes Drehmoment wird auch auf die Drehmomenthülse 11 übertragen. Dieses Drehmoment kann auch an der Drehmomenthülse 11 abgefragt werden. Die Drehmomenthülse 11 dient der Summation der beiden Drehmomente von rechtem und linkem Pedal. Dadurch reicht im Prinzip ein Sensor für die Detektion aus.

Erfindungsgemäß ist ferner ein Drehmomentsensor 13, umfassend einen akustischen Oberflächenwellensensor 14 und eine separate Sende-Empfangseinheit 15 vorgesehen. Der akustische Oberflächenwellensensor 14 ist, wie aus den Figuren 2 bis 4 ersichtlich ist, auf der Drehmomenthülse 11 angeordnet. Figur 4 zeigt zur besseren Erkennbarkeit die Kurbelwelle 12 und die Drehmomenthülse 11 als separate Bauteile. Die Verbindung von Kurbelwelle 12 und Drehmomenthülse 11 erfolgt über eine Steckverzahnung (vgl. Figur 3 und 4). Die Sende-/Empfangseinheit 15 ist an einem Gehäuseteil (in Figur 2 nur schematisch gezeigt) dargestellt und ist mit einer Steuereinheit 16 verbunden. Die Steuereinheit 16 ist dabei eingerichtet, den Elektromotor 3, basierend auf wenigstens den vom Drehmomentsensor 13 erfassten Werten, anzusteuern. Vorzugsweise steuert die Steuereinheit 16 den Elektromotor 3 noch zusätzlich, basierend auf weiteren Werten, wie beispielsweise der Geschwindigkeit des Elektrofahrrads und einer Kurbelwellendrehzahl.

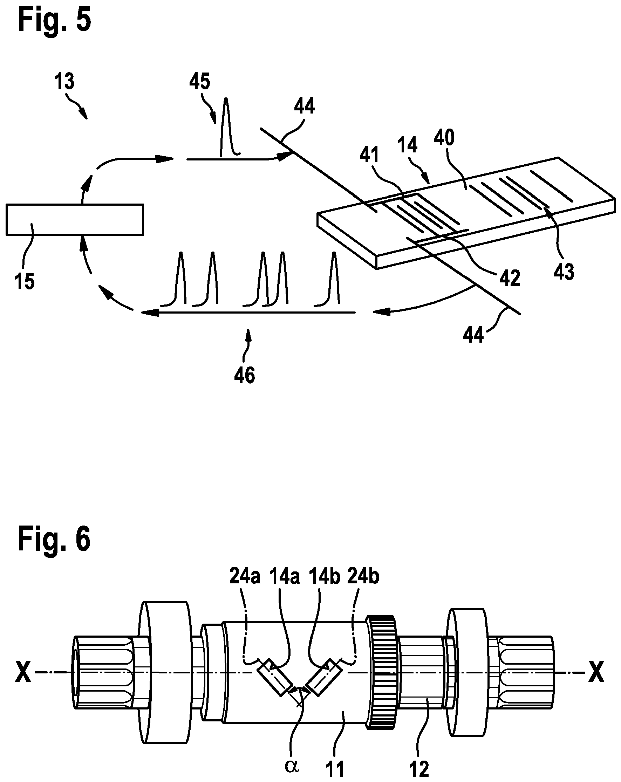

Der Drehmomentsensor 13 ist in Figur 5 im Detail dargestellt. Wie aus Figur 5 ersichtlich ist, benötigt der eigentliche akustische Oberflächenwellensensor 14 keine eigene Energieversorgung. Die Sende-Empfangseinheit 15 sendet einen Hochfrequenz-Abfrageimpuls 45 zum akustischen Oberflächenwellensensor 14. Dieser umfasst eine erste Elektrode 41, eine zweite Elektrode 42, einen Reflektor 43 und eine Antennenstruktur 44. Die Elektroden 41, 42 sowie der Reflektor 43 sind dabei auf einem Substrat 40, welches in diesem Ausführungsbeispiel ein piezoelektrisches Substrat ist, angeordnet. Das piezoelektrische Substrat 40 kann beispielsweise aus Keramik oder einem Polymer sein. Ferner können die beiden Elektroden 41, 42, welche eine kammartige Struktur aufweisen und einen Interdigitalwandler bilden, auf das Substrat 40 aufgedruckt sein. Der Reflektor 43 kann Erhebungen und/oder Vertiefungen umfassen.

Die Oberfläche des Substrats 40 stellt hierbei eine Ebene bereit, welche insbesondere mögliche Störungen einer Ausbreitung der Oberflächenwelle aufgrund der Hülsenkrümmung vermeidet und ebene (Lauf-)Flächen auf der Hülse schafft.

Mittels der akustischen Oberflächenwellen kann nun eine direkte Messung des durch Torsionsbeanspruchung durch den Fahrer in der Kurbelwelle 12 hervorgerufenen elastischen Verformung erfasst werden. Hierbei wird eine Zeitverzögerung bei einer Reflexion des hochfrequenten Abfrageimpulses 45 als Maß für die Torsion der Kurbelwelle 12 verwendet. Der Hochfrequenz-Abfrageimpuls 45 wird über die Antennenstruktur 44 zur eigentlichen Sensorstruktur, dem Interdigitalwandler, geleitet. Mittels eines inversen, piezoelektrischen Effekts wird der elektromagnetische Impuls 45 in eine akustische (mechanische) Oberflächenwelle gewandelt. Diese wird dann an den Strukturen des Reflektors 43 reflektiert und wieder mittels des piezoelektrischen Effekts in Form von Hochfrequenzantworten 46 über die Antennenstruktur 44 ausgegeben und von der Sende-/Empfangseinheit 15 aufgenommen.

Wie aus der obigen Beschreibung ersichtlich ist, ist der akustische Oberflächenwellensensor 14 somit ein rein passives Bauteil, welches keine eigene Energiequelle zum Betrieb benötigt. Daher ist der akustische Oberflächenwellensensor 14 wartungsfrei. Ferner weist der akustische Oberflächenwellensensor 14 eine deutlich einfachere Elektronik auf, insbesondere wird kein Schwingkreis benötigt, wie beispielsweise bei der Verwendung von Dehnungsmessstreifen. Ferner benötigt der akustische Oberflächenwellensensor 14 wenig Platz und ist sehr robust. Insbesondere kann der akustische Oberflächenwellensensor auch an schwer zugänglichen Stellen, so beispielsweise der Kurbelwelle 12, an welcher in Verbindung mit dem Elektromotor 3 nur wenig Platz vorhanden ist, angeordnet werden (auch wegen der Funkabfragbarkeit - keine Kabel, Elektronik kann weiter weg sein). Darüber hinaus weist der erfindungsgemäße Drehmomentsensor 13 nur ein sehr geringes Gewicht auf und kann sehr preisgünstig bereitgestellt werden. Ferner ergeben sich durch die Verwendung des erfindungsgemäßen Drehmomentsensors 13 keine akustischen Emissionen und insbesondere ergibt sich kein negativer Einfluss auf einen mechanischen Gesamtwirkungsgrad am Kurbeltrieb 2.

Es sei ferner angemerkt, dass der erfindungsgemäße akustische Oberflächenwellensensor 14 auf dem Substrat 40 als vorgefertigtes Bauteil bereitgestellt werden kann, welches anschließend einfach auf die Drehmomenthülse 11 geklebt wird. Alternativ kann die Struktur des akustischen Oberflächenwellensensors auch direkt auf eine Oberfläche, beispielsweise die Oberfläche der Drehmomenthülse 11, aufgebracht werden, z.B. mittels Aufdrucken. Hierdurch können insbesondere eventuell vorhandene montagebedingte Eigenspannungen der Sensoranordnung, welche zu verfälschten Signalen führen könnten, vermieden werden.

Die Hochfrequenz-Antwort 46 des akustischen Oberflächenwellensensors 14 erfolgt aufgrund einer um den Faktor 1/100000 geringeren Ausbreitungsgeschwindigkeit der Oberflächenwelle gegenüber der Lichtgeschwindigkeit des Abfrageimpulses nahezu störungsfrei. In der Zeit der verzögerten Antwort sind meistens alle Störreflexionen aus der Umgebung, z.B. Echos oder dergleichen, abgeklungen. Dadurch wird ein sehr genaues Signal und somit eine sehr exakte Erfassung des durch den Fahrer aufgebrachten Drehmoments möglich.

Die Figuren 6 bis 10 zeigen bevorzugte Alternativen. Wie aus Figur 6 ersichtlich ist, zeigt dieses Ausführungsbeispiel einen ersten akustischen Oberflächenwellensensor 14a und einen zweiten akustischen Oberflächenwellensensor 14b. Die beiden Oberflächenwellensensoren 14a, 14b weisen jeweils eine Längsachse 24a, 24b auf, welche sich in einem Winkel α von 90° schneiden. Durch die Verwendung von zwei akustischen Oberflächenwellensensoren 14a, 14b ist es möglich, dass ein Präferenzsignal erfasst wird, welches insbesondere unabhängig von thermischen Einflüssen ist. Dadurch ist eine noch genauere Erfassung des von einem Fahrer aufgebrachten Drehmoments möglich. Die beiden Längsachsen 24a, 24b sind jeweils in einem Winkel von 45° zu einer Mittelachse X-X der Kurbelwelle 12 angeordnet.

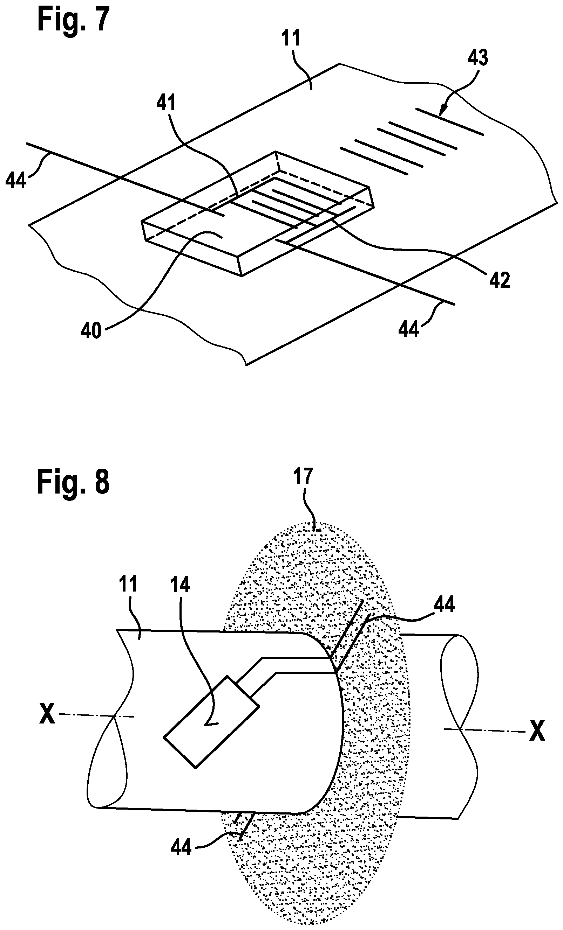

Figur 7 zeigt eine weitere alternative Ausgestaltung des akustischen Oberflächenwellensensors 14. Im Gegensatz zum ersten Ausführungsbeispiel weist der akustische Oberflächenwellensensor 14 gemäß dem dritten Ausführungsbeispiel in Figur 7 ein Substrat 40 auf, auf welchem lediglich die erste und zweite Elektrode 41, 42 angeordnet ist. Der Reflektor 43 mit entsprechender Struktur ist unmittelbar auf dem Bauteil, in diesem Ausführungsbeispiel der Drehmomenthülse 11, an welchem das Drehmoment gemessen werden soll, aufgebracht, z.B. in Form von Kerben. Die Kerben können beispielsweise mittels Laser oder mechanisch durch Fräsen in das Hülsenmaterial eingebracht werden. Diese Diskontinuität an der Oberfläche der Hülse bewirkt die Reflexion der von dem Substrat ausgehenden Oberflächenwelle. Durch das Einbringen von mehreren Kerben lässt sich dem Antwortsignal ein eindeutiges Muster (Codierung) aufprägen und somit eine Trennung des Drehmomentsignals von möglichen Störsignalen, welche z.B. durch den Elektromotor in Form von Körperschall hervorgerufen werden könnten, erzielen. Durch die Trennung der Reflektoren vom Substrat können insbesondere montagebedingte Störungen, wie z.B. das Einbringen von Vorspannungen in den Sensor, bei einer Klemmverbindung von Substrat und Hülse auf einfache Weise weitestgehend vermieden werden.

Um eine möglichst optimale Übertragung der Oberflächenwelle vom Substrat auf die Drehmomenthülse 11 zu gewährleisten, wird das Substrat 40 mit der Seite des Interdigitalwandlers mechanisch, z.B. über einen Klebeprozess, mit der Drehmomenthülse 11 kontaktiert. Das separat gefertigte piezoelektrische Substrat mit aufgedrucktem Interdigitalwandler kann dabei aus Keramik oder einem Polymer bestehen. Da sowohl der Interdigitalwandler als auch die Drehmomenthülse 11 aus Metall bestehen, muss ein nichtleitender Kleber verwendet werden.

Figur 8 zeigt eine weitere Ausgestaltung gemäß einem vierten Ausführungsbeispiel der Erfindung, bei der die Antennenstruktur 44 auf einer Leiterplatte 17 angeordnet ist. Die Leiterplatte 17 ist scheibenförmig und um die Drehmomenthülse 11 herum angeordnet. Die Antennenstruktur 44 verläuft dabei in radialer Richtung zu einer Mittelachse X-X der Kurbelwelle. Auf der Leiterplatte 17 kann die Antennenstruktur 44 in jeder beliebigen Form und Länge vorgesehen werden und somit optimal angeordnet werden.

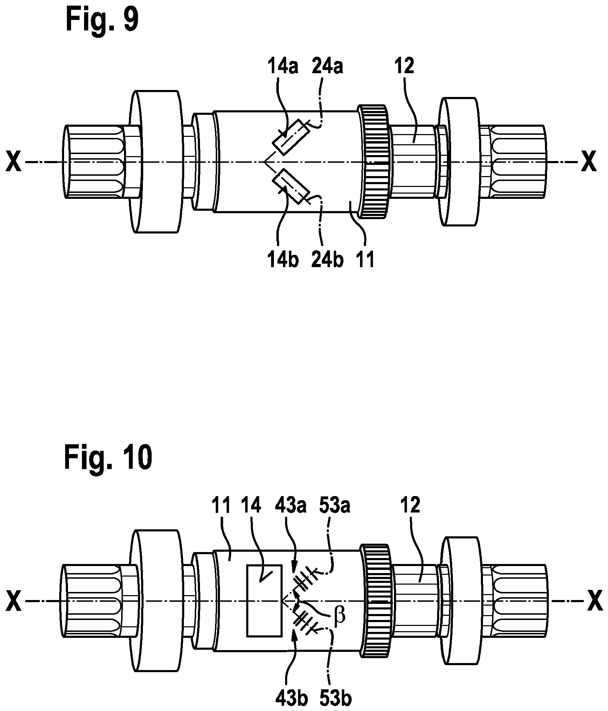

Das in Figur 9 gezeigte fünfte Ausführungsbeispiel der Erfindung entspricht im Wesentlichen dem in Figur 6 gezeigten zweiten Ausführungsbeispiel, wobei ebenfalls zwei akustische Oberflächenwellensensoren 14a, 14b vorgesehen sind. Allerdings ist die Anordnung der beiden akustischen Oberflächenwellensensoren 14a, 14b in Figur 9 im Vergleich zur Figur 6 um 90° gedreht. Mit anderen Worten sind die beiden akustischen Oberflächensensoren 14a, 14b zu beiden Seiten bezüglich einer Längsebene, welche die Mittelachse X-X der Kurbelwelle 12 mit einschließt, angeordnet. Ansonsten entspricht dieses Ausführungsbeispiel dem zweiten Ausführungsbeispiel.

Figur 10 zeigt ein sechstes Ausführungsbeispiel der Erfindung, wobei lediglich ein akustischer Oberflächenwellensensor 14 vorgesehen ist. Allerdings sind bei diesem Ausführungsbeispiel ein erster Reflektor 43a und ein zweiter Reflektor 43b vorgesehen. Die beiden Reflektoren 43a, 43b sind dabei direkt auf der Oberfläche der Drehmomenthülse 11 angeordnet. Ferner sind die beiden Reflektoren 43a, 43b derart angeordnet, dass sich die Längsachsen 53a, 53b der beiden Reflektoren 43a, 43b in einem Winkel β von 90° schneiden. Somit sind für die Reflexion der akustischen Oberflächenwelle zwei Laufwege vorgegeben, wobei lediglich ein einziger akustischer Oberflächenwellensensor 41 notwendig ist. Hierdurch können insbesondere Kosten durch Verwendung nur eines Oberflächenwellensensors 14 reduziert werden. Weiterhin ist auch eine Montage deutlich einfacher. Die Reflektoren können dabei beispielsweise durch Kerben in der Oberfläche der Drehmomenthülse 11 vorgesehen werden.

Weiterhin sei angemerkt, dass alternativ der akustische Oberflächenwellensensor 14 auch auf einer Innenfläche der Drehmomenthülse 11 angeordnet werden kann. Hierdurch kann insbesondere ein optimaler Schutz gegenüber elektromagnetischen Störimpulsen erreicht werden. Die Antennenstruktur 44 kann beispielsweise über eine Öffnung durch die Drehmomenthülse nach außen geführt werden.

Weiter alternativ kann der akustische Oberflächenwellensensor 14 auch als Folienelement ausgeführt sein und beispielsweise aufgeklebt werden. Besonders bevorzugt wird dann der Reflektor 43 direkt auf der Oberfläche der Drehmomenthülse 11 vorgesehen.

Eine weiter bevorzugt alternative Ausgestaltung der Erfindung liegt darin, dass die Antennenstruktur 44 beispielsweise auf einem in unmittelbarer Nachbarschaft zur Drehmomenthülse 11 angeordneten Zahnrad des Getriebes 10 angeordnet wird. Hierdurch kann die Antennenstruktur 44 in Radialrichtung verlaufen, ohne dass ein zusätzliches Bauteil notwendig ist.

## Patentansprüche

1. Elektrofahrrad, umfassend
- einen Elektromotor (3),
- einen Kurbeltrieb (2) mit einer ersten Kurbel (7), einer zweiten Kurbel (8) und einer Kurbelwelle (12),
- einen Drehmomentsensor (13) zur Erfassung eines von einem Fahrer am Kurbeltrieb (2) aufgebrachten Drehmoments und
- eine Steuereinheit (16), welche eingerichtet ist, den Elektromotor (3) basierend auf wenigstens den vom Drehmomentsensor (13) erfassten Werten anzusteuern, um das Fahrzeug anzutreiben,
- wobei der Drehmomentsensor (13) am Kurbeltrieb (2) angeordnet ist,
**dadurch gekennzeichnet, dass**
- der Drehmomentsensor (13) wenigstens einen akustischen Oberflächenwellensensor (14) umfasst, wobei der akustische Oberflächenwellensensor über eine dynamische Messung eines Drehmoments mittels Oberflächenwellen eine direkte Messung einer durch Torsionsbeanspruchung aufgrund eines von einem Fahrer eingebrachten Drehmoments ausführt und eine Zeitverzögerung bei einer Reflexion eines hochfrequenten Abfrageimpulses als Maß für die Torsion der Oberflächenwelle verwendet.

2. Elektrofahrrad nach Anspruch 1, **dadurch gekennzeichnet, dass** der akustische Oberflächenwellensensor (14) auf einer mit der Kurbelwelle (12) verbundenen Hülse (11) angeordnet ist.

3. Elektrofahrrad nach Anspruch 1, **dadurch gekennzeichnet, dass** der Oberflächenwellensensor (14) direkt auf der Kurbelwelle (12) angeordnet und insbesondere ein aufgedruckter Oberflächenwellensensor oder ein auf einer Folie aufgebrachter Oberflächensensor ist.

4. Elektrofahrrad nach einem der vorhergehenden Ansprüche, **dadurch gekennzeichnet, dass** der akustische Oberflächenwellensensor (14) ein separates Bauteil ist und insbesondere ein piezoelektrisches Substrat (40), einen Interdigitalwandler mit erster Elektrode (41) und zweiter Elektrode (42) und eine Antennenstruktur (44) umfasst.

5. Elektrofahrrad nach einem der vorhergehenden Ansprüche, **dadurch gekennzeichnet, dass** Teile des akustischen Oberflächenwellensensors (14) oder der gesamte akustische Oberflächenwellensensor (14) direkt auf einer Oberfläche, an welcher das Drehmoment gemessen werden soll, angeordnet ist.

6. Elektrofahrrad nach einem der vorhergehenden Ansprüche, **dadurch gekennzeichnet, dass** der akustische Oberflächenwellensensor eine Reflektoreinrichtung (43) umfasst, wobei die Reflektoreinrichtung (43) am Oberflächenwellensensor angeordnet ist oder direkt auf einer Oberfläche, auf welcher ein Drehmoment gemessen werden soll, angeordnet ist.

7. Elektrofahrrad nach Anspruch 6, **dadurch gekennzeichnet, dass** die Reflektoreinrichtung (43) Kerben und/oder Vorsprünge auf einer Oberfläche umfasst.

8. Elektrofahrrad nach einem der vorhergehenden Ansprüche, ferner umfassend eine Leiterplatte (17), wobei eine Antenne (40) des akustischen Oberflächenwellensensors auf der Leiterplatte angeordnet ist oder in die Leiterplatte integriert ist.

9. Elektrofahrrad nach einem der vorhergehenden Ansprüche, umfassend einen ersten akustischen Oberflächenwellensensor (14a) und einen zweiten akustischen Oberflächenwellensensor (14b).

10. Elektrofahrrad nach Anspruch 9, **dadurch gekennzeichnet, dass** der erste und zweite akustische Oberflächenwellensensor (14a, 14b) jeweils eine Längsachse (24a, 24b) aufweisen und die Längsachsen (24a, 24b) der Oberflächenwellensensoren nicht parallel zu einer Längsachse (X-X) der Kurbelwelle (12) sind.

11. Elektrofahrrad nach Anspruch 9 oder 10, **dadurch gekennzeichnet, dass** der erste und zweite akustische Oberflächenwellensensor (14a, 14b) derart angeordnet ist, dass sich Längsachsen (24a, 24b) der akustischen Oberflächenwellensensoren (14a, 14b) schneiden, insbesondere in einem Winkel von 90°.

12. Elektrofahrrad nach einem der Ansprüche 9 bis 11, **dadurch gekennzeichnet, dass** der erste und zweite akustische Oberflächenwellensensor (14a, 14b) symmetrisch zu einer Ebene, welche die Längsachse (X-X) der Kurbelwelle (12) einschließt, angeordnet sind.

13. Elektrofahrrad nach einem der vorhergehenden Ansprüche, **dadurch gekennzeichnet, dass** der Drehmomentsensor (13) eine separate Sende-/Empfangseinheit (15) umfasst, welche insbesondere an einem Gehäuse, insbesondere einem Gehäuse des Kurbeltriebs (2) oder einem Gehäuse des Elektromotors (3), angeordnet ist.

14. Elektrofahrrad nach einem der vorhergehenden Ansprüche, **dadurch gekennzeichnet, dass** der Elektromotor (3) unmittelbar am Kurbeltrieb (2) angeordnet ist.

## Claims

1. Electric cycle, comprising
- an electric motor (3),
- a crank drive (2) with a first crank (7), a second crank (8) and a crankshaft (12),
- a torque sensor (13) for sensing a torque applied to the crank drive (2) by a rider and
- a control unit (16) which is configured to actuate the electric motor (3) on the basis of at least the values acquired by the torque sensor (13), in order to drive the vehicle,
- wherein the torque sensor (13) is arranged on the crank drive (2),
**characterized in that**
- the torque sensor (13) comprises at least one acoustic surface wave sensor (14), wherein the acoustic surface wave sensor carries out, by means of dynamic measurement of a torque by means of surface waves, a direct measurement of a through torsional loading on the basis of a torque introduced by a rider, and uses a time delay during reflection of a high-frequency interrogation pulse as a measure of the torsion of the surface wave.

2. Electric cycle according to Claim 1, **characterized in that** the acoustic surface wave sensor (14) is arranged on a sleeve (11) connected to the crankshaft (12).

3. Electric cycle according to Claim 1, **characterized in that** the surface wave sensor (14) is arranged directly on the crankshaft (12) and is, in particular, a printed-on surface wave sensor or a surface wave sensor which is applied by means of a film.

4. Electric cycle according to one of the preceding claims, **characterized in that** the acoustic surface wave sensor (14) is a separate component and comprises, in particular, a piezo-electric substrate (40), an inter-digital transducer with a first electrode (41) and second electrode (42) and an antenna structure (44).

5. Electric cycle according to one of the preceding claims, **characterized in that** parts of the acoustic surface wave sensor (14) or the entire acoustic surface wave sensor (14) are/is arranged directly on a surface at which the torque is to be measured.

6. Electric cycle according to one of the preceding claims, **characterized in that** the acoustic surface wave sensor comprises a reflector device (43), wherein the reflector device (43) is arranged on the surface wave sensor or is arranged directly on a surface on which a torque is to be measured.

7. Electric cycle according to Claim 6, **characterized in that** the reflector device (43) comprises notches and/or projections on a surface.

8. Electric cycle according to one of the preceding claims, also comprising a circuit board (17), wherein an antenna (40) of the acoustic surface wave sensor is arranged on the circuit board or is integrated into the circuit board.

9. Electric cycle according to one of the preceding claims, comprising a first acoustic surface wave sensor (14a) and a second acoustic surface wave sensor (14b).

10. Electric cycle according to Claim 9, **characterized in that** the first and second acoustic surface wave sensors (14a, 14b) each have a longitudinal axis (24a, 24b), and the longitudinal axes (24a, 24b) of the surface wave sensors are not parallel to a longitudinal axis (X-X) of the crankshaft (12).

11. Electric cycle according to Claim 9 or 10, **characterized in that** the first and second acoustic surface wave sensors (14a, 14b) are arranged in such a way that longitudinal axes (24a, 24b) of the acoustic surface wave sensors (14a, 14b) intersect, in particular at an angle of 90°.

12. Electric cycle according to one of Claims 9 to 11, **characterized in that** the first and second acoustic surface wave sensors (14a, 14b) are arranged symmetrically with respect to a plane which includes the longitudinal axis (X-X) of the crankshaft (12).

13. Electric cycle according to one of the preceding claims, **characterized in that** the torque sensor (13) comprises a separate transceiver unit (15) which is arranged, in particular, on a housing, in particular a housing of the crank drive (2) or a housing of the electric motor (3).

14. Electric cycle according to one of the preceding claims, **characterized in that** the electric motor (3) is arranged directly on the crank drive (2).

## Revendications

1. Vélo électrique, comprenant
- un moteur électrique (3),
- un pédalier (2) pourvu d'une première pédale (7), d'une deuxième pédale (8) et d'un arbre de pédalier (12),
- un capteur de couple (13), destiné à détecter un couple appliqué par un utilisateur sur le pédalier (2) et
- un module de commande (16), lequel est aménagé pour activer le moteur électrique (3) sur la base d'au moins les valeurs détectées par le capteur de couple (13), pour entraîner le véhicule,
- le capteur de couple (13) étant placé sur le pédalier (2),
**caractérisé en ce que**
- le capteur de couple (13) comprend au moins un capteur d'ondes acoustiques superficielles (14), par l'intermédiaire d'une mesure dynamique d'un couple au moyen d'ondes superficielles, le capteur d'ondes acoustiques superficielles procédant à une mesure directe d'une par contrainte en torsion suite à un couple introduit par un utilisateur et utilisant une temporisation lors d'une réflexion d'une impulsion d'interrogation à haute fréquence en tant que dimension pour la torsion de l'onde superficielle.

2. Vélo électrique selon la revendication 1, **caractérisé en ce que** le capteur d'ondes acoustiques superficielles (14) est placé sur une douille (11) reliée à l'arbre de pédalier (12).

3. Vélo électrique selon la revendication 1, **caractérisé en ce que** le capteur d'ondes superficielles (14) est placé directement sur l'arbre de pédalier (12) et il s'agit notamment d'un capteur d'ondes superficielles imprimé ou d'un capteur superficiel appliqué sur un film.

4. Vélo électrique selon l'une quelconque des revendications précédentes, **caractérisé en ce que** le capteur d'ondes acoustiques superficielles (14) est un composant séparé et comprend notamment un substrat piézoélectrique (40), un transducteur interdigité avec première électrode (41) et deuxième électrode (42) et une structure d'antenne (44) .

5. Vélo électrique selon l'une quelconque des revendications précédentes, **caractérisé en ce que** des parties du capteur d'ondes acoustiques superficielles (14) ou l'ensemble du capteur d'ondes acoustiques superficielles (14) est ou sont placé(es) directement sur une surface sur laquelle le couple est censé être mesuré.

6. Vélo électrique selon l'une quelconque des revendications précédentes, **caractérisé en ce que** le capteur d'ondes acoustiques superficielles comprend un système de réflecteurs (43), le système de réflecteurs (43) étant placé sur le capteur d'ondes superficielles ou directement sur une surface, sur laquelle le couple est censé être mesuré.

7. Vélo électrique selon la revendication 6, **caractérisé en ce que** le système de réflecteurs (43) comprend des encoches et/ou des saillies sur une surface.

8. Vélo électrique selon l'une quelconque des revendications précédentes, comprenant par ailleurs un circuit imprimé (17), une antenne (40) du capteur d'ondes acoustiques superficielles étant placée sur le circuit imprimé ou intégrée dans le circuit imprimé.

9. Vélo électrique selon l'une quelconque des revendications précédentes, comprenant un premier capteur d'ondes acoustiques superficielles (14a) et un deuxième capteur d'ondes acoustiques superficielles (14b).

10. Vélo électrique selon la revendication 9, **caractérisé en ce que** le premier et le deuxième capteurs d'ondes acoustiques superficielles (14a, 14b) comportent chacun un axe longitudinal (24a, 24b) et les axes longitudinaux (24a, 24b) des capteurs d'ondes superficielles ne sont pas parallèles à un axe longitudinal (X-X) de l'arbre de pédalier (12).

11. Vélo électrique selon la revendication 9 ou 10, **caractérisé en ce que** le premier et le deuxième capteurs d'ondes acoustiques superficielles (14a, 14b) sont placés de telle sorte que des axes longitudinaux (24a, 24b) des capteurs d'ondes acoustiques superficielles (14a, 14b) se recoupent, notamment sous un angle de 90°.

12. Vélo électrique selon l'une quelconque des revendications 9 à 11, **caractérisé en ce que** le premier et le deuxième capteurs d'ondes acoustiques superficielles (14a, 14b) sont placés en symétrie par rapport à un plan qui englobe l'axe longitudinal (X-X) de l'arbre de pédalier (12) .

13. Vélo électrique selon l'une quelconque des revendications précédentes, **caractérisé en ce que** le capteur de couple (13) comprend un module émetteur/récepteur (15) séparé, lequel est placé notamment sur un boîtier, notamment un boîtier du pédalier (2) ou un boîtier du moteur électrique (3) .

14. Vélo électrique selon l'une quelconque des revendications précédentes, **caractérisé en ce que** le moteur électrique (3) est placé directement sur le pédalier (2).
